**Europäisches Patentamt**

(19) **European Patent Office**

**Office européen des brevets**

(11) Veröffentlichungsnummer: **0 033 499**

**A2**

(12) # EUROPÄISCHE PATENTANMELDUNG

(21) Anmeldenummer: **81100515.6**

(22) Anmeldetag: **24.01.81**

(51) Int. Cl.³: **H 05 B 1/02**
**H 05 B 3/68**

(30) Priorität: **31.01.80 DE 3003419**

(43) Veröffentlichungstag der Anmeldung:
**12.08.81 Patentblatt 81/32**

(84) Benannte Vertragsstaaten:
**AT CH DE FR GB IT LI SE**

(71) Anmelder: **E.G.O. Regeltechnik GmbH**

**D-6833 Waghäusel(DE)**

(72) Erfinder: **Schilling, Wilfried**
**Karlsruher Strasse 16**
**D-7527 Kraichtal(DE)**

(72) Erfinder: **Lorenz, Siegbert**
**Im Brettspiel 4**
**D-7518 Bretten(DE)**

(72) Erfinder: **Koch, Friedrich**
**Goethestrasse 11**
**D-7519 Oberderdingen(DE)**

(74) Vertreter: **Patentanwälte Ruff und Beier**
**Neckarstrasse 50**
**D-7000 Stuttgart 1(DE)**

(54) **Verfahren und Vorrichtung zur Heissanzeige.**

(57) Eine optische und/oder akustische Signaleinrichtung (11) soll anzeigen, daß eine Beheizung (13) eines Kochgerätes heiß ist. Sie wird dadurch betätigt, daß bei Einschalten der Beheizung (13) von einer Ausgangszahl ($Z_A$) ausgehend vorwärts gezählt und bei Überschreiten einer ersten Zahl die Signaleinrichtung (11) eingeschaltet wird. Nach Ausschalten der Beheizung (13) wird rückwärts gezählt und bei Unterschreiten einer zweiten Zahl die Signaleinrichtung (11) ausgeschaltet.

Die Zählgeschwindigkeit in beiden Richtungen und die Ausgangszahl ($Z_A$) können von Parametern, beispielsweise der Anzahl der eingeschalteten Beheizungen, abhängig sein.

Die Vorrichtung enthält einen Zähler (20), der in beiden Richtungen zählen kann und von einer Takterzeugungslogik (18) angesteuert wird, die bei Erkennen des Einschaltens oder Ausschaltens einer Beheizung den Zählvorgang auslöst.

Vorzugsweise werden die Steuer- und Zählfunktionen von einem Mikroprozessor durchgeführt.

FIG. 1

**. 0033499**

PATENTANWÄLTE **RUFF** UND **BEIER** STUTTGART

Dipl.-Chem. Dr. Ruff
Dipl.-Ing. J. Beier
Dipl.-Phys. Schöndorf

Neckarstraße 50
D-7000 Stuttgart 1
Tel.: (0711) 22 70 51*
Telex 07-23412 erub d

- 1 -

14. Januar 1981 Sf/al

A 18 785 EP

Anmelderin:     E.G.O. Regeltechnik GmbH
Hambrücker Strasse
6833 Waghäusel

Verfahren und Vorrichtung zur Heißanzeige

Die Erfindung betrifft ein Verfahren zur Anzeige des Heißzustandes bei Kochgeräten mit einer optischen und/oder akustischen, den Heißzustand anzeigenden Signaleinrichtung, wobei
nach Abschalten aller Beheizungen gezählt und nach Erreichen
einer bestimmten Zahl die Signaleinrichtung ausgeschaltet wird,
sowie eine Vorrichtung zur Durchführung dieses Verfahrens.

Kochgeräte, insbesondere Glaskeramikkochfelder, sind üblicherweise mit einer Signaleinrichtung versehen, die anzeigt, daß
die Oberfläche des Kochgerätes warm bzw. heiß ist. Dabei besteht allgemein das Problem, die Anzeige derart auszugestalten, daß die Signaleinrichtung weder zu früh noch zu spät angeschaltet und wieder ausgeschaltet wird.

Es ist bereits vorgeschlagen worden, eine reine Zeitsteuerung der Signaleinrichtung derart vorzunehmen, daß nach dem Abschalten der letzten Beheizung während einer festen Zeit von ca. 30 bis 40 Minuten die Signaleinrichtung betätigt bleibt. Es ist ebenfalls bekannt, diese reine Zeitsteuerung mit Hilfe eines elektronischen Zählers durchzuführen (US-PS 3 852 728), so daß nach Ausschalten aller Beheizungen doch eine gewisse Zeit gezählt wird, bis auch die Signaleinrichtung ausgeschaltet wird. Dies bedeutet jedoch, daß bei nur kurz eingeschalteter Beheizung eine unnötig lange Anzeige des tatsächlich nicht mehr vorhandenen Heißzustandes erfolgt. Ein weiterer

Nachteil schon vorgeschlagener Lösungen besteht darin, daß beim Einschalten der Beheizung schon eine Anzeige erfolgt, obwohl zu diesem Zeitpunkt die Kochfläche noch nicht heiß ist.

Der Erfindung liegt die Aufgabe zugrunde, ein Verfahren der eingangs genannten Art zu schaffen, das eine unter allen Umständen korrekte Anzeige ermöglicht und sich darüber hinaus einfach durchführen läßt.

Zur Lösung dieser Aufgabe schlägt die Erfindung ein Verfahren der eingangs genannten Art vor, wonach beim Einschalten der Beheizung des Kochgerätes von einer Ausgangszahl an vorwärts gezählt und nach Abschalten der Beheizung des Kochgerätes rückwärts gezählt wird, wobei bei Überschreiten einer ersten Zahl die Signaleinrichtung ein- und bei Unterschreiten einer zweiten Zahl ausgeschaltet wird.

Mit Hilfe dieses Verfahrens ist es möglich, einerseits zu berücksichtigen, daß bei nur kurz eingeschalteter Beheizung noch keine Heißanzeige erfolgt, andererseits ist die Zeitdauer bis zum Wiederausschalten der Heißanzeige davon abhängig, bis zu welcher Zahl während des eingeschalteten Zustands der Beheizung vorwärts gezählt wurde. Damit ist also auch die Möglichkeit gegeben, eine zu lange Heißanzeige zu verhindern. Die Ausgangszahl, von der an gezählt wird, kann irgendeine Zahl sein, die größer oder gleich Null ist. Dabei kann beispielsweise die erste Zahl, die zum Einschalten der Signaleinrichtung führt, größer oder gleich der Ausgangszahl sein. Die zweite Zahl, die zum Wiederausschalten der Signaleinrichtung führt, kann beispielsweise die Zahl Null sein.

Da die Aufheizzeit und die Abkühldauer eines Kochgerätes im allgemeinen unterschiedlich groß sind, schlägt die Erfindung weiterhin vor, das vorwärts und rückwärts unterschiedlich schnell gezählt wird.

Da im allgemeinen nach einer bestimmten Zeitdauer keine Erhöhung der Temperatur eines Kochgerätes mehr erfolgt, sieht die Erfindung ebenfalls vor, daß die Vorwärtszählung bei Erreichen einer Höchstzahl unterbrochen wird. Damit wird ein unnötiges Hochzählen vermieden.

Um eine besonders gute Anpassung der Heißanzeige an die Aufheiz- und Abkühlcharakteristiken des Kochgerätes zu gewährleisten, wird nach einem weiteren Merkmal der Erfindung rückwärts mit einer von der bei Beendigung des Vorwärtszählens erreichten Zahl und/oder von der Anzahl der im Betrieb gewesenen Beheizungen des Kochgerätes abhängigen Geschwindigkeit gezählt. Damit wird der Tatsache Rechnung getragen, daß die Abkühldauer innerhalb eines bestimmten Bereiches umso größer ist, je länger die Beheizung eingeschaltet war. Andererseits ist die Abkühldauer auch umso größer, je mehr Heizstellen des Kochgerätes während einer festen Dauer eingeschaltet waren.

In Weiterbildung sieht die Erfindung vor, daß vorwärts und rückwärts mit einer mindestens bereichsweise konstanten Geschwindigkeit gezählt wird. Das Zählen mit einer konstanten Zählgeschwindigkeit ist besonders einfach durchzuführen. Wenn man beim Zählen die konstante Geschwindigkeit nach einer gewissen Zeitdauer in eine andere, ebenfalls konstante Geschwindigkeit abändert, kann man damit eine besonders gute Anpassung an die Aufheiz- bzw.Abkühlcharakteristik herstellen.

Besonders einfach ist es, wenn die Signaleinrichtung bei Erreichen der Zahl Null ausgeschaltet wird.

Der Erfindung liegt ebenfalls die Aufgabe zugrunde, eine Vorrichtung zur Anzeige des Heißzustandes eines Kochgerätes mit einer optischen und/oder akustischen Signaleinrichtung, insbesondere zur Durchführung des erfindungsgemäßen Verfahrens, zu schaffen, die eine möglichst exakte Anzeige des Heißzustandes ermöglicht, die leicht und billig herzustellen und zu montieren und platzsparend an einer beliebigen Stelle des Kochgerätes unterzubringen ist.

Zur Lösung dieser Aufgabe schlägt die Erfindung eine Vorrichtung der genannten Art vor, die einen elektronischen, vorwärts- und rückwärtszählenden Zähler, eine den Zähler steuernde Takterzeugungslogik, eine mit dieser verbundene Detektoreinrichtung zur Feststellung des Ein- bzw. Ausschaltens der Beheizung des Kochgerätes sowie mindestens eine an die Zählerstufen des Zählers angeschlossene Zählerstandserkennungsschaltung aufweist, die bei Erreichen einer bestimmten Zahl die Signaleinrichtung ein- und/oder ausschaltet.

Die Takterzeugungslogik dient dazu, den Zähler vorwärts oder rückwärts zu zählen. Die Information, ob der Zähler vorwärts oder rückwärts gezählt werden soll, liefert die Detektoreinrichtung, die aufgrund ihrer Kenntnis des Schaltzustandes der Beheizungen des Kochgerätes erkennen kann, ob vorwärts oder rückwärts gezählt werden soll. Wenn auch nur eine Beheizung des Kochgerätes eingeschaltet ist, regt die Detektoreinrichtung den Zähler an, bei Eintreffen eines Impulses von der Takterzeugungslogik seinen Inhalt um eins zu erhöhen. Die Detektoreinrichtung kann mit den Schaltern der Beheizungen des Kochgerätes beispielsweise derart verbunden sein, daß sie eine der Anzahl der Schalter entsprechende Anzahl von Schaltern aufweist, die mit den Schaltern des Kochgerätes mechanisch gekoppelt sind. Es ist jedoch ebenfalls eine galvanische oder berührungsfreie, beispielsweise induktive Kopplung der Eingänge der Detektorschaltungen an die Beheizungen des Kochgerätes denkbar.
Die Takterzeugungslogik kann beispielsweise einen Oszillator enthalten, der nach einer entsprechenden Untersetzung seiner Impulse den Zähler vorwärts zählt.

In Weiterbildung sieht die Erfindung vor, daß die Takterzeugungslogik derart ausgebildet ist, daß sie bei Erkennen des Einschaltens der Beheizung des Kochgerätes den
Zähler auf eine Ausgangszahl setzt und ihn mit einer bestimmten Frequenz vorwärtszählen läßt. Zu diesem Zweck
besitzt die Takterzeugungslogik eine Verbindung mit dem
Zähler, wobei die Verbindung in dem Zähler über logische
Schaltelemente derart angeschlossen ist, daß bei Vorliegen
eines Signals auf der Verbindung die einzelnen Zählerstufen des Zählers auf entsprechende Werte gesetzt werden.

Anstelle eines in der Takterzeugungslogik enthaltenen
Oszillators kann nach einem weiteren Merkmal der Erfindung
die Takterzeugungslogik von einem als Zeitbasisvorteiler
wirkenden Vorzähler ansteuerbar sein, mit dessen mindestens
letzten Zählerstufen sie verbunden ist. Nach diesem Merkmal
wird also diese Untersetzung des Zeitsignales in dem Vorzähler durchgeführt, wobei die Takterzeugungslogik von
einer Vorzählerstufe ansteuerbar ist, deren Signal schon
entsprechend untersetzt ist. Dabei ist die Takterzeugungslogik mit den letzten Zählerstufen, beispielsweise den
letzten sechs Zählerstufen, verbunden. Somit kennt die
Takterzeugungslogik auch den Inhalt der sechs letzten
Zählstufen des Vorzählers.

Da die Zählerstandserkennungsschaltung bei Vorliegen einer
bestimmten Zahl, beispielsweise der Zahl Null, in dem
Zähler die Signaleinrichtung ausschaltet, muß dafür gesorgt werden, daß nicht beim Oberlauf des Zählers während
dessen Vorwärtszählen der Zählerinhalt gleich Null wird.
Das gleiche gilt für das Rückwärtszählen. Zu diesem
Zweck ist nach einem weiteren Merkmal der Erfindung vorgesehen, daß der Zähler einen mit dem Vorzähler und/oder
der Takterzeugungslogik verbundenen Obertragsausgang aufweist, der bei Maximalstand und bei Minimalstand des
Zählers dessen Vorwärts- bzw. Rückwärtszählen verhindert.

Besonders günstig ist es, wenn der Vorzähler von der Netzfrequenz steuerbar ist. Damit kann ein eigener Oszillator
eingespart werden.

In Weiterbildung sieht die Erfindung vor, daß die Takterzeugungslogik bei Ausschalten der Beheizung des Kochgerätes den Zähler mit einer von dem augenblicklichen Stand
des Zählers oder Vorzählers abhängigen Frequenz rückwärts
zählen läßt. Damit wird erreicht, daß die Zeitdauer, nach
der die Signaleinrichtung nach Abschalten der Beheizung
ausgeschaltet wird, von der Einschaltdauer abhängig wird.

Besonders günstig ist es, wenn eine Zählerstandserkennungsschaltung vorhanden ist, die bei von Null verschiedenem
Zählerstand die Signaleinrichtung einschaltet. Damit wird
also beim Hochzählen die Signaleinrichtung eingeschaltet,
sobald die Zahl 1 erreicht ist, während beim Rückwärtszählen bei Erreichen der Zahl Null die Signaleinrichtung
wieder ausgeschaltet wird.

Es kann vorgesehen sein, daß die Ausgangszahl gleich der
maximalen im Zähler speicherbaren Zahl ist. Besonders günstig ist es, wenn der Vorzähler ein elf- bis fünfzehnstufiger
Asynchronzähler ist. Dabei ist vorzugsweise der Zähler ein
vierstufiger Binärzähler.

Als eine günstige Maßnahme hat es sich gezeigt, wenn die
Takterzeugungslogik den Zähler nach einer Einschaltdauer
von 0,1 bis 0,4 Minuten auf eine Zahl zwischen 1 und 5 setzt.

Als Beispiel für eine besonders günstige Vorwärtszählcharakteristik wird ein Zeitintervall von 0,2 bis 0,8 Minuten
definiert, wobei die Takterzeugungslogik im ersten Intervall 3 bis 9, im zweiten Intervall 2 bis 6, im dritten
Intervall 1 bis 4 und im vierten Intervall 1 bis 2 Impulse
dem Zähler zuführt. Hierbei muß natürlich dafür gesorgt
werden, daß die Gesamtzahl der Impulse nicht größer ist
als die maximale in dem Zähler speicherbare Zahl.

Eine besonders günstige Realisierung der erfindungsgemäßen
Vorrichtung wird dadurch erreicht, daß die Vorrichtung
einen Mikroprozessor enthält, der die Zähl- und Steuerfunktionen durchführt. Mit Hilfe dieses Mikroprozessors läßt
sich eine leichte Anpassung einer einzigen Vorrichtung
an die unterschiedlichsten Kochgeräte durchführen.

Weitere Merkmale, Einzelheiten und Vorzüge der Erfindung
ergeben sich aus der folgenden Beschreibung bevorzugter
Ausführungsformen sowie anhand der Zeichnung.
Hierbei zeigen:

> Fig. 1 und 2    mehrere zeitliche Abläufe    erfindungs-
> gemäß ausgestalteter Verfahren ;

> Fig. 3und 4    der Fig.1 ähnliche Darstellungen bei
> anderen Ausführungsbeispielen;

> Fig. 5    ein Blockschaltbild einer erfindungsge-
> mäßen Vorrichtung;

> Fig. 6    ein Blockschaltbild einer leicht abge-
> änderten erfindungsgemäßen Vorrichtung.

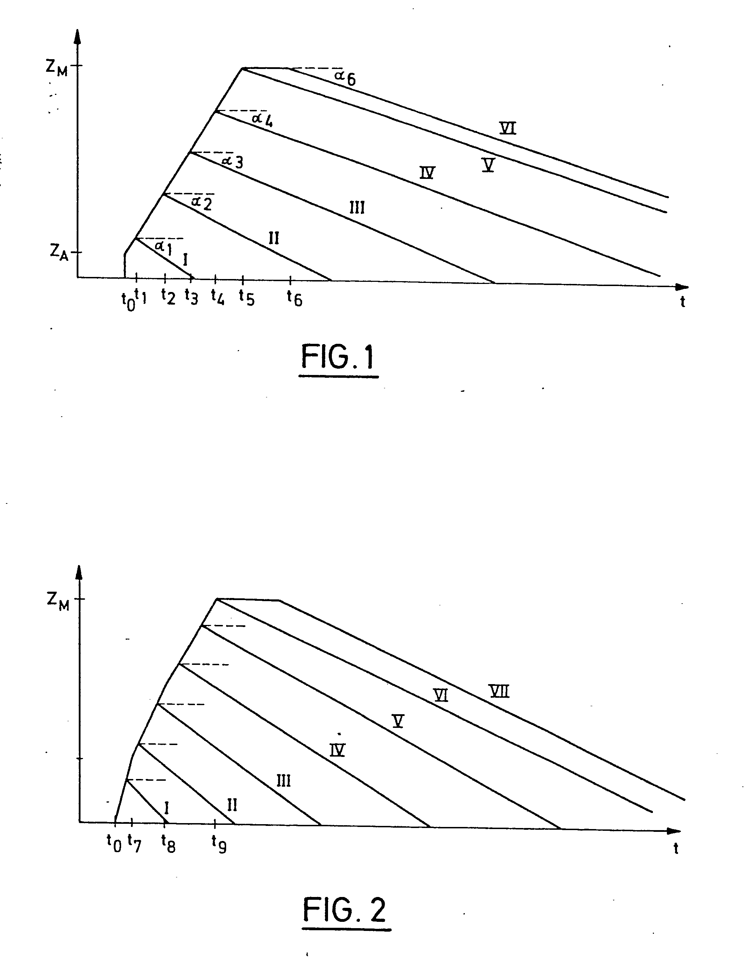

Die verschiedenen, zeitliche Abläufe des erfindungsgemäßen
Verfahrens darstellenden Kurven I bis VI der Fig.1 unterscheiden sich durch ihre Ausschaltzeitpunkte T1 bis T6.
Der aufsteigende Ast aller Kurven ist identisch, während
der abfallende Teil aller Kurven einen unterschiedlichen
Schnittpunkt mit der die Zeit darstellenden Abszisse aufweist. Dabei besitzen die Kurven I bis V zusätzlich unterschiedliche Neigungen, wobei die Neigungen, d.h.die Winkel
zwischen den abfallenden Teilen und der jeweils gestrichelt
dargestellten Horizontalen die graphische Darstellung der
Zählgeschwindigkeit sind. Wie aus der Figur zu sehen ist,
ist die Neigung, d.h. die Rückwärtszählgeschwindigkeit,
der geraden Abschnitte der Kurven 1 bis 5 abhängig davon,
bis zu welcher Zeit zum Zeitpunkt des Ausschaltens der
Beheizung, dargestellt durch die Abszissenabschnitte T1
bis T6, vorwärtsgezählt worden war. Je länger also die
Beheizung eingeschaltet war, und je höher dementsprechend
während der Einschaltdauer gezählt worden war, desto länger
ist auch die Abschaltdauer.

Es ist ebenfalls zu sehen, daß bei Erreichen der Zahl $Z_M$
der Vorwärtszählgang unterbrochen wird.

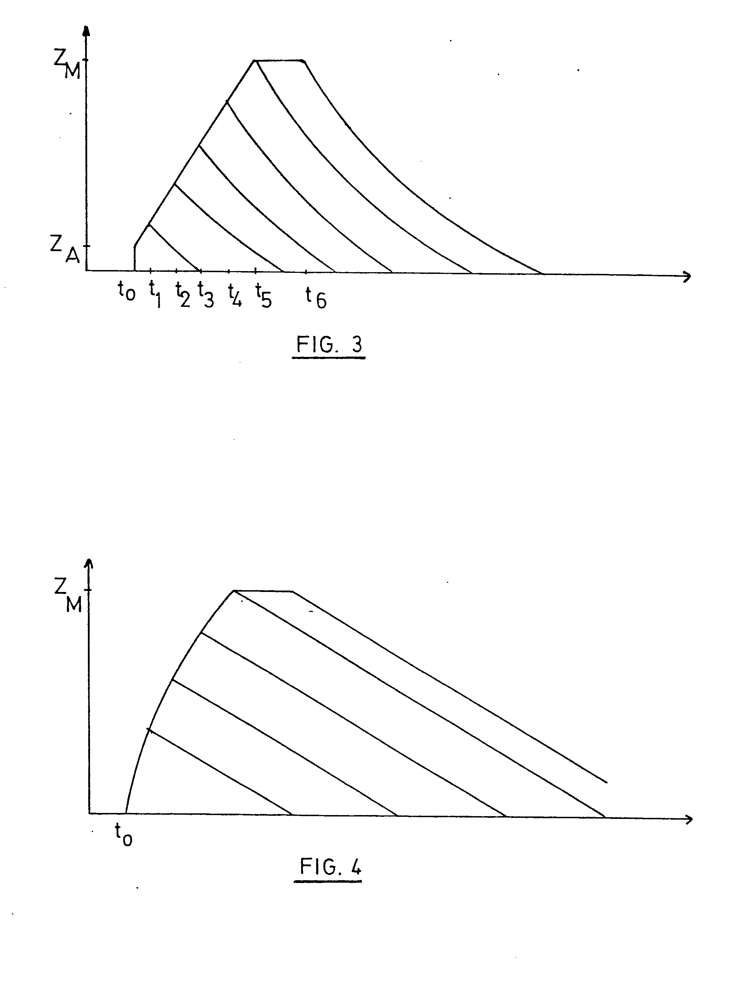

Bei den in Figur 2 dargestellten zeitlichen Abläufen besteht gegenüber den Abläufen der Fig.1 der Unterschied,
daß das Vorwärtszählen nur stückweise mit konstanter Geschwindigkeit durchgeführt ist. Es ist zu sehen, daß der
aufsteigende Teil, der bei allen Kurven identisch ist,
von T0 bis T7 konstant verläuft, anschließend von T7 bis T8
ebenfalls konstant, aber mit einer unterschiedlichen Neigung, was einer unterschiedlichen Zählgeschwindigkeit
entspricht. Von T8 bis T9 besitzt die ansteigende Kurve
wieder eine unterschiedliche, aber konstante Neigung, was
bedeutet, daß in diesem Bereich wieder mit einer konstanten,
aber unterschiedlichen Geschwindigkeit vorwärtsgezählt wird.
Auch hier ist die Rückwärtszählgeschwindigkeit abhängig
davon, bis zu welcher Zahl während des Vorwärtszählens
gezählt wurde.

Die Fig.3 und 4 zeigen zeitliche Abläufe anderer Ausführungsformen des erfindungsgemäßen Verfahrens. Dabei ist wieder der
aufsteigende Ast aller Kurven identisch, während die abfallenden Teile der Kurven, die unterschiedliche Ausschaltzeitpunkte darstellen, auch einen unterschiedlichen Verlauf aufweisen.

Bei den in Fig.3 dargestellten Verfahren wird zu Beginn des
Einschaltvorganges der Beheizung, ausgehend von der Zahl $Z_A$,
mit einer konstanten Geschwindigkeit bis zu einer Endzahl $Z_M$
hochgezählt. Beim Rückwärtszählen ist die Zählgeschwindigkeit abhängig von dem jeweiligen augenblicklichen Zählergebnis. Wird also beispielsweise von der Zahl 10 an rückwärts gezählt, und nach einem gewissen Zeitpunkt die Zahl 9
erreicht, so wird nunmehr die weitere Zählgeschwindigkeit
von der Zahl 9 abhängig sein. Dies bedeutet nichts anderes
als eine exponentiell abfallende Zählgeschwindigkeit.
Eine besonders günstige und vorteilhafte Ausführungsform des
erfindungsgemäßen Verfahrens ist in Fig.4 dargestellt. Hier
wird beim Vorwärtszählen mit einer von dem jeweiligen augenblicklichen Zählergebnis abhängigen Geschwindigkeit gezählt.
Dabei ist darauf zu achten, daß mit wachsendem Zählergebnis
die Zählgeschwindigkeit verringert wird. Das Rückwärtszählen
erfolgt mit einer konstanten, vom Zählergebnis unabhängigen
Geschwindigkeit. Daher sind alle abfallenden Äste der Kurven
in Fig.4 parallale Geraden.

Es ist bei den Ausführungsformen nach Fig.1 und Fig.2 darauf
zu achten, daß beim Rückwärtszählen die Geschwindigkeit um so
kleiner ist, je größer die zum Zeitpunkt des Ausschaltens
erreichte Zahl ist. Bei der Ausführungsform nach Fig.3 ist
die Rückwärtszählgeschwindigkeit um so größer, je größer das
augenblickliche Zählergebnis ist. Bei der Ausführungsform
nach Fig.4 wird die Zählgeschwindigkeit in Vorwärtsrichtung
um so kleiner, je größer das Zählergebnis wird.

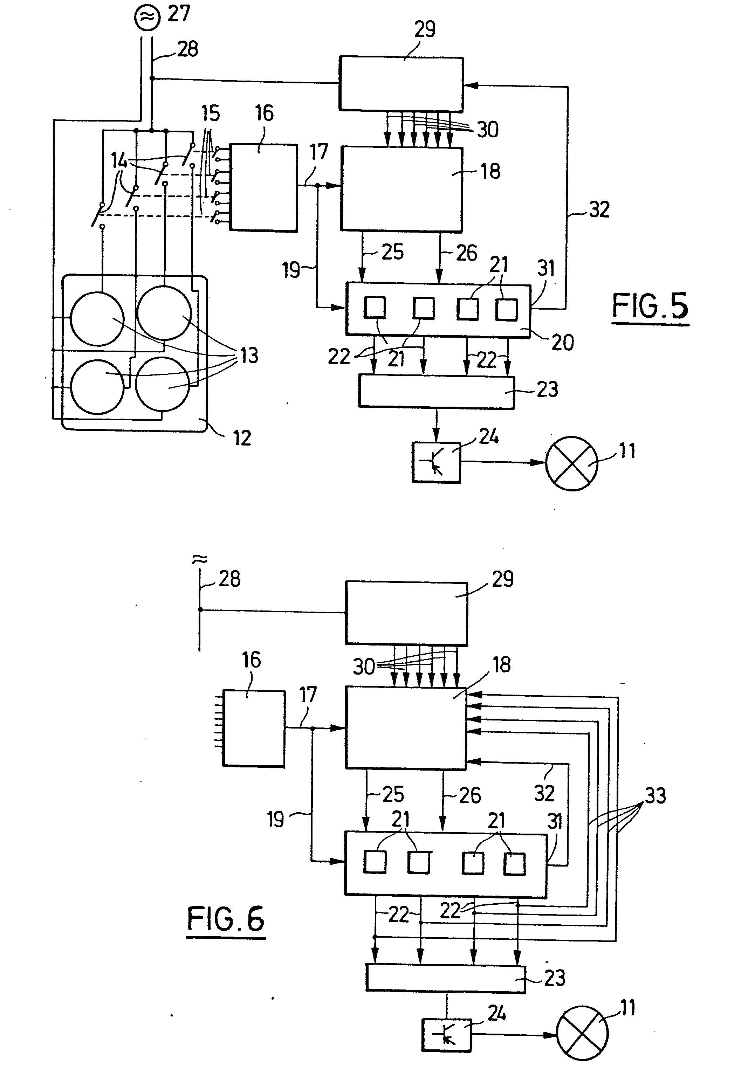

Fig.5 zeigt ein Blockschaltbild einer erfindungsgemäßen Vorrichtung. Sie dient dazu, mit Hilfe einer Signaleinrichtung 11,
beispielsweise einer Anzeigelampe, den Temperaturzustand einer Glaskeramikkochfläche 12 anzuzeigen, die in dem hier dargestellten Beispiel mit vier einzelnen die Kochfelder bildenden Beheizungen 13 versehen ist. Zum Einschalten der Beheizungen 13 sind vier manuell bedienbare Schalter 14 vorgesehen. Mit Hilfe dieser Schalter 14 werden die Beheizungen 13 in den üblichen Stromkreis eingeschaltet. Mechanisch mit den Schaltern 14 verbunden sind ebenfalls vier Schalter 15, die an den Eingang einer Detektoreinrichtung 16 angeschlossen sind.

Die Detektoreinrichtung ist über die Leitung 17 mit einer Takterzeugungslogik 18 verbunden, wobei von der Leitung 17 eine zweite Leitung 19 abzweigt, die mit einem in Vorwärts- und Rückwärtsrichtung zählenden Zähler 20 verbunden ist. Dieser Zähler besitzt in dem hier dargestellten Ausführungsbeispiel vier binäre Zählerstufen 21. Jede dieser Zählerstufen 21 ist über eine weitere Leitung 22 mit einer Zählerstandserkennungsschaltung 23 verbunden. Diese Zählerstandserkennungsschaltung 23 dient dazu, bei Vorliegen bestimmter Eingangssignale auf den Leitungen 22 einen ihr nachgeschalteten Halbleiterschalter 24 durchzuschalten, der die Signaleinrichtung 11 einschaltet.

Die Takterzeugungslogik 18 ist über zwei Ausgangsleitungen 25 und 26 mit dem Zähler 20 verbunden. Dabei dient die Leitung 25 dazu, den Zähler 20 weiterzuzählen. D.h.,falls auf der Leitung 25 ein Signal vorliegt, wird der Inhalt des Zählers 20 um eins erhöht oder erniedrigt, in Abhängigkeit davon, welche Information die Detektoreinrichtung 16 über die Leitung 19 dem Zähler 20 liefert.

Die Leitung 26 dient dazu, den Zähler 20 auf eine vorbestimmte Zahl zu setzen. Zu diesem Zweck ist die Leitung 26 im Inneren des Zählers 20 über hier nicht dargestellte, logische Schaltungen mit allen vier Zählerstufen 21 in entsprechender Weise verbunden. Die logische Verknüpfung der Leitung 16 mit den einzelnen Zählerstufen hängt davon ab, auf welche
Zahl der Inhalt des Zählers 20 gebracht werden soll, wenn
auf der Leitung 26 ein Signal vorliegt.

An die mit einer Wechselspannungsquelle 27 verbundene
Netzleitung 28 ist ein Vorzähler 29 angeschlossen, der dazu
dient, die Netzfrequenz zu untersetzen, und dadurch als
Zeitbasisvorteiler wirkt. Die letzten sechs Zählerstufen
des Vorzählers 29 sind über entsprechende Leitungen 30
mit der Takterzeugungslogik 18 verbunden. Über diese Leitungen 30 erhält die Takterzeugungslogik 18 ihre Information darüber, wann sie über die Leitung 25 einen neuen
Impuls zum Verändern des Inhalts des Zählers 20 abgeben
soll. Gleichzeitig erhält sie von dem Vorzähler 29 Informationen darüber, wann sie den Zähler 20 über die Leitung 26 auf eine bestimmte Zahl setzen soll.

Der Zähler 20 besitzt einen mit allen seinen Zählerstufen 21
verbundenen Übertragsausgang 31, der über eine Übertragsleitung 32 mit dem Vorzähler 29 verbunden ist. Auf der
Übertragungsleitung 32 ist immer dann ein Signal vorhanden,
wenn alle Zählerstufen 21 des Zählers 20 entweder gleich
Eins oder gleich Null sind. Der erste Fall bedeutet, daß
der Inhalt des Zählers gleich der maximal in dem Zähler 20
abspeicherbaren Zahl ist, so daß kein neuer Zählimpuls
zur Erhöhung dieser Zahl über die Leitung 25 zugeführt
werden darf. Dies wird dadurch erreicht, daß der Übertragsausgang 31 über die Leitung 32 mit dem Vorzähler 29 verbunden ist, der nunmehr keine die Takterzeugungslogik 18
steuernden Signale mehr abgibt.

Im zweiten Fall, d.h., wenn alle Stufen 21 des Zählers 20
gleich Null sind, bedeutet dies, daß beim Rückwärtszählen
die Zahl Null erreicht wurde. In diesem Fall darf nicht
weiter rückwärts gezählt werden, da sonst wieder eine
Heißanzeige mit Hilfe der Signaleinrichtung 11 erfolgen würde.

Dies wird ebenfalls durch die Ankopplung des Übertragsausganges 31 an den Vorzähler 29 bewirkt.

Die Detektoreinrichtung 16 dient dazu, nicht nur über die
Leitung 17 das Tätigwerden der Takterzeugungslogik 18
auszulösen, sondern auch über die Leitung 19 dem Zähler 20
anzuzeigen, ob ein auf der Leitung 25 ankommender Impuls
zur Erhöhung oder zur Erniedrigung des Inhalts des Zählers 20
führen soll. Wenn auch nur ein Schalter 15 der Detektoreinrichtung 16 geschlossen ist, bedeutet dies, daß über
die Leitung 19 der Zähler 20 zum Vorwärtszählen angeregt
wird. Wenn alle Schalter 15 geöffnet sind, wird dagegen
der Zähler 20 zum Rückwärtszählen angeregt.

Bei der in Figur 5 dargestellten Ausführungsform kennt
die Takterzeugungslogik 18 den Inhalt der letzten sechs
Zählerstufen des Vorzählers 29. Sie ist derart ausgebildet,
daß sie die über die Leitung 25 abzugebenden Impulse an
den Zähler 20 mit einer Frequenz abgibt, die abhängig ist
vom Stand der ihr bekannten letzten sechs Stellen des
Vorzählers 29.

Bei dem in Figur 6 dargestellten Ausführungsbeispiel einer
erfindungsgemäßen Vorrichtung sind aus Gründen der vereinfachten Darstellung die eigentliche Kochfläche 12 und die
dazugehörenden Teile weggelassen worden. Hier sind im
Unterschied zu der Vorrichtung nach Fig.5 die Ausgangsleitungen 22 des Zählers 20 über die Leitungen 33 an die
Takterzeugungslogik 18 angeschlossen. Außerdem ist der
Übertragsausgung 31 des Zählers 20 ebenfalls an die Takterzeugungslogik 18 und nicht an den Vorzähler 29 angeschlossen. Im übrigen sind die beiden Vorrichtungen gleich.
Bei dieser Ausführungsform der erfindungsgemäßen Vorrichtung kennt die Takterzeugungslogik den Inhalt des Speichers20
und ist derart ausgebildet, daß sie die Frequenz, mit der
sie Signale über die Leitung 25 an den Zähler 20 abgibt,

in Abhängigkeit von dem Inhalt des Zählers 20 ändern kann.

Die Detektoreinrichtung 16 kann derart ausgebildet sein,
daß sie der Takterzeugungslogik 18 eine Information liefert,
wonach diese die Frequenz, mit der sie  Signale über die
Leitung 25 abgibt, abhängig davon macht, wie viele der Beheizungen 13 ein- bzw. ausgeschaltet wurden.

———————

PATENTANWÄLTE **RUFF** UND **BEIER** STUTTGART

Dipl.-Chem. Dr. Ruff
Dipl.-Ing. J. Beier
Dipl.-Phys. Schöndorf

Neckarstraße 50
D-7000 Stuttgart 1
Tel.: (0711) 227051*
Telex 07-23412 erub d

0033499

14. Januar 1981 Sf/al

A 18 785 EP

Anmelderin: E.G.O. Regeltechnik GmbH
Hambrücker Strasse
6833 Waghäusel

Verfahren und Vorrichtung zur Heißanzeige

A n s p r ü c h e

1. Verfahren zur Anzeige des Heißzustandes bei Kochgeräten
mit einer optischen und/oder akustischen, den Heißzustand anzeigenden Signaleinrichtung, wobei nach Abschalten aller Beheizungen gezählt und nach Erreichen einer
bestimmten Zahl die Signaleinrichtung ausgeschaltet wird,
dadurch gekennzeichnet, daß beim Einschalten mindestens
einer Beheizung des Kochgerätes von einer Ausgangszahl
an vorwärts gezählt, bei Überschreiten einer ersten Zahl
die Signaleinrichtung eingeschaltet und nach Abschalten
aller Beheizungen rückwärts gezählt wird, wobei das Abschalten der Signaleinrichtung bei Unterschreiten einer
zweiten Zahl vorgenommen wird.

2. Verfahren nach Anspruch 1, dadurch gekennzeichnet, daß
vorwärts und rückwärts unterschiedlich schnell gezählt

Zugelassene Vertreter vor dem Europäischen Patentamt
Professional Representatives before the European Patent Office · Mandataires agréés près l'Office Européen des Brevets
Postscheckkonto Stuttgart (BLZ 60010070) 42930-708 · Dresdner Bank Stuttgart (BLZ 600 80000) Konto 901641

wird, wobei die Vorwärtszählung bei Erreichen einer Höchstzahl ($Z_M$) unterbrochen wird.

3.  Verfahren nach Anspruch 1 oder 2, dadurch gekennzeichnet, daß vorwärts mit einer von der Zahl der eingeschalteten Beheizungen abhängigen Geschwindigkeit oder ausgehend von einer von der Zahl der eingeschalteten Beheizungen abhängigen Ausgangszahl ($Z_A$) und rückwärts mit einer von der bei Beendigung des Vorwärtszählens erreichten Zahl und/oder von der Anzahl der eingeschaltet gewesenen Beheizungen des Kochgerätes abhängigen Geschwindigkeit gezählt wird.

4.  Verfahren nach einem der vorhergehenden Ansprüche, dadurch gekennzeichnet, daß vorwärts und rückwärts mit einer mindestens stückweise konstanten Geschwindigkeit gezählt wird.

5.  Verfahren nach einem der vorhergehenden Ansprüche, dadurch gekennzeichnet, daß in der einen Zählrichtung mit einer von dem jeweiligen augenblicklichen Zählergebnis abhängigen und in der anderen Zählrichtung mit einer konstanten Geschwindigkeit gezählt wird.

6.  Vorrichtung zur Anzeige des Heißzustandes bei Kochgeräten mit einer optischen und/oder akustischen Signaleinrichtung, insbesondere zur Durchführung des Verfahrens nach einem der vorhergehenden Ansprüche, dadurch gekennzeichnet, daß sie einen elektronischen vorwärts und rückwärts zählenden Zähler (20), eine den Zähler (20) steuernde Takterzeugungslogik (18), eine mit dieser verbundene Detektoreinrichtung (16) zur Feststellung des Ein- bzw. Ausschaltens der Beheizungen (13) des Kochgerätes sowie mindestens eine an die Zählerstufen (21) des

Zählers (20) angeschlossene Zählerstanderkennungsschaltung (23) aufweist, die bei Erreichen einer bestimmten Zahl die Signaleinrichtung (11) ein- bzw.
ausschaltet.

7.  Vorrichtung nach Anspruch 6, dadurch gekennzeichnet,
    daß die Takterzeugungslogik (18) von einem als Zeitbasisvorteiler wirkenden, von der Netzfrequenz
    steuerbaren Vorzähler (29) ansteuerbar ist, mit dessen
    mindestens letzten Zählerstufen sie verbunden ist, wobei der Zähler (20) einen mit dem Vorzähler (29) und/
    oder der Takterzeugungslogik (18) verbundenen Obertragsausgang (31) aufweist, der bei  Maximalstand und bei
    Minimalstand des Zählers (20) dessen Vorwärts- bzw.
    Rückwärtszählen verhindert.

8.  Vorrichtung nach Anspruch 7, dadurch gekennzeichnet,
    daß die Takterzeugungslogik (18) derart ausgebildet
    ist, daß sie bei Erkennen des Einschaltens einer Beheizung (13) den Zähler (20) auf eine, gegebenenfalls
    der maximalen im Zähler (20) speicherbaren Zahl entsprechende Ausgangszahl $(Z_A)$ setzt, ihn mit einer bestimmten Frequenz vorwärts zählen und bei Ausschalten
    aller Beheizungen (13) mit einer vom augenblicklichen
    Stand des Zählers (20) oder des Vorzählers (29) abhängigen Frequenz rückwärts zählen läßt.

9.  Vorrichtung nach einem der Ansprüche 6 bis 8, dadurch
    gekennzeichnet, daß der Vorzähler (29) ein  elf- bis
    fünfzehnstufiger Asynchronzähler und der Zähler (20)
    ein vierstufiger Binärzähler ist.

10. Vorrichtung nach einem der Ansprüche 6 bis 9, dadurch gekennzeichnet, daß die Takterzeugungslogik (18) den Zähler (20) nach einer Einschaltdauer von 0,1 bis 0,4 Minuten auf eine Zahl zwischen 1 und 5 setzt und in vier Intervallen von je 0,2 bis 0,8 Minuten Dauer hochzählt, wobei sie ihm im ersten Intervall 3 bis 9, im zweiten Intervall 2 bis 6, im dritten Intervall 1 bis 4 und im vierten Intervall 1 bis 2 Impulse zuführt.

11. Vorrichtung nach einem der Ansprüche 6 bis 10, dadurch gekennzeichnet, daß sie einen Mikroprozessor enthält, der die Zähl- und Steuerfunktionen durchführt.

12. Vorrichtung nach einem der Ansprüche 6 bis 11, dadurch gekennzeichnet, daß die Takterzeugungslogik (18) bei Einschalten mindestens einer Beheizung (13) des Koch-gerätes den Zähler (22) mit einer vom jeweiligen augenblicklichen Stand des Zählers (20) oder des Vorzählers (29) abhängigen Frequenz vorwärts und bei Ausschalten aller Beheizungen (13) mit einer vom Stand des Zählers (20) oder des Vorzählers (29) zum Zeitpunkt des Ausschaltens abhängigen Frequenz rückwärts zählen läßt.

FIG.1

FIG. 2

0033499

FIG. 3

FIG. 4

FIG.5

FIG.6